(19) **Europäisches Patentamt European Patent Office Office européen des brevets**

(11) **EP 4 047 277 B1**

(12) **FASCICULE DE BREVET EUROPEEN**

| | |
|---|---|
| (45) Date de publication et mention de la délivrance du brevet:<br>**10.09.2025 Bulletin 2025/37** | (51) Classification Internationale des Brevets (IPC):<br>**F24D 17/00** *(2022.01)* **F24D 19/10** *(2006.01)*<br>**E03C 1/02** *(2006.01)* |
| (21) Numéro de dépôt: **22157751.3** | (52) Classification Coopérative des Brevets (CPC):<br>**F24D 19/1063; E03C 1/02; F24D 17/0073** |
| (22) Date de dépôt: **21.02.2022** | |

(54) **PROCEDE DE CONTROLE D'UNE DISTRIBUTION D'EAU CHAUDE SANITAIRE, SYSTEME DE FOURNITURE ET COMPTEUR DE DISTRIBUTION ASSOCIES**

VERFAHREN ZUR STEUERUNG EINER WARMWASSERVERSORGUNG, ENTSPRECHENDES VERSORGUNGSSYSTEM UND ENTSPRECHENDER VERSORGUNGSZÄHLER

METHOD FOR CONTROLLING DOMESTIC HOT WATER DISTRIBUTION, ASSOCIATED SUPPLY SYSTEM AND DISTRIBUTION METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2021 FR 2101697**

(43) Date de publication de la demande:
**24.08.2022 Bulletin 2022/34**

(73) Titulaire: **Sagemcom Energy & Telecom SAS 92270 Bois-Colombes (FR)**

(72) Inventeurs:
• **TEBOULLE, Henri 92500 RUEIL MALMAISON (FR)**
• **CAZEIN, Patrick 92500 RUEIL MALMAISON (FR)**

(74) Mandataire: **Cabinet Le Guen Maillet 3, impasse de la Vigie CS 71840 35418 Saint-Malo Cedex (FR)**

(56) Documents cités:
**EP-A1- 3 098 536 WO-A1-2019/053385 FR-A1- 2 936 042 FR-A1- 3 046 218**

**Description**

DOMAINE TECHNIQUE

La présente invention se rapporte au domaine de la distribution contrôlée d'eau chaude sanitaire. L'invention concerne plus particulièrement la production d'eau chaude sanitaire dans une installation collective en fonction de la température de l'eau distribuée et au moyen de compteurs de distribution améliorés.

ETAT DE LA TECHNIQUE ANTERIEURE

La production d'eau chaude sanitaire peut être réalisée de façon individuelle ou collective. Dans le cas d'une production collective, l'eau chaude sanitaire est produite dans une installation de production collective puis distribuée à travers une installation de distribution (encore appelée système de distribution) vers des compteurs de distribution divisionnaires. Ainsi, par exemple, une même chaudière peut approvisionner en eau chaude sanitaire un grand nombre de logements à travers une installation de distribution commune. Chacun des logements est alors équipé d'un compteur de consommation dit « compteur divisionnaire » qui permet de mesurer et facturer la consommation d'eau chaude propre à ce logement. Des déperditions de chaleur dans l'installation de distribution commune sont inévitables et l'eau approvisionnée dans un logement présente le plus souvent une température sensiblement inférieure à celle de l'eau fournie en sortie de la chaudière de production. Un contrôle de la température de production au niveau d'une chaudière de distribution ne permet pas, du fait des déperditions de chaleur, de fournir une eau chaude sanitaire à une température contrôlée aux différents points de distribution que sont les compteurs de distribution divisionnaires.
Dans les installations de distribution d'eau chaude sanitaire, la croissance des légionnelles, bactéries naturellement présentes dans l'eau, est très rapide lorsque la température de l'eau est comprise entre 25°C et 42°C, avec une croissance maximale à environ 37°C. Les légionnelles colonisent fréquemment les installations de distribution d'eau chaude sanitaire et sont responsables d'affections respiratoires. Fort heureusement, ces bactéries cessent de se multiplier en dessous de 20°C et au-dessus de 46°C. En outre, il est connu que ces bactéries sont détruites en quelques heures à une température de 55°C ou en 30 minutes à une température de 60°C, et quasi instantanément à une température de 70°C. Ainsi, des plages de température de stockage et de distribution de l'eau sont à privilégier pour limiter le développement de ces bactéries qui présentent un risque pour la santé. D'autre part, il est connu que les dépôts calcaires nuisent aux installations de production et de distribution et que ces dépôts sont favorisés par une eau chauffée à des températures supérieures à 50°C. Des chaudières de production d'eau chaude sanitaire permettent d'opérer une chauffe à des températures comprises en 60°C et 65°C pour prévenir les risques liés à la présence de légionnelles. Cela ne permet toutefois pas un contrôle précis de la température aux différents points de distribution et de prélèvement de l'eau chaude sanitaire dans les logements.
Le document EP 3 098 536 A1 décrit une estimation d'un profil de température d'un réservoir d'eau utilisé pour stocker de l'énergie électrique.
Le document FR 2 936 042 A1 décrit un procédé de lutte contre les déperditions énergétiques permettant d'éviter la prolifération de bactéries du type legionella, dans une installation d'eau chaude.
Enfin, lorsqu'un logement a été inoccupé pendant une longue période, par exemple pendant plusieurs semaines, il est possible que des légionnelles se soient développées dans le circuit de distribution du logement. Il est alors opportun d'éliminer rapidement ces légionnelles dès que le logement est à nouveau occupé.
La situation peut donc être améliorée.

EXPOSE DE L'INVENTION

L'invention a pour but de proposer un procédé et un système de distribution d'eau chaude sanitaire permettant de résoudre au moins certains des inconvénients de l'art antérieur.
A cet effet, il est proposé un procédé de contrôle d'une température de distribution d'eau chaude sanitaire, exécuté dans une unité de gestion d'une installation de production de l'eau chaude, et comprenant:

- obtenir des premières informations représentatives de températures moyennes de l'eau chaude distribuée, déterminées par plages horaires, et mesurées par un ou plusieurs compteurs de distribution divisionnaires, au cours d'une période de référence,
- obtenir une valeur minimale et une valeur maximale de ces premières informations,
- déterminer une condition de température de l'eau chaude distribuée à partir d'au moins la valeur maximale ou d'au moins la valeur minimale, et d'au moins un seuil de température prédéfini, et,
- si la condition est remplie, envoyer une séquence de contrôle de la température de distribution vers l'installation de production d'eau chaude sanitaire.

Avantageusement, il est ainsi possible de contrôler la température de production d'une eau chaude sanitaire à partir d'informations de températures mesurées au plus près des points de prélèvement réel, de sorte à contrôler la température de l'eau distribuée au niveau de ces points de prélèvement. Le contrôle peut en outre être opéré dynamiquement et en fonction de critères prédéfinis, tels qu'un risque de légionellose ou un risque d'entartrage important.

Le procédé selon l'invention peut également comporter les caractéristiques suivantes, considérées seules ou en combinaison :

- Le au moins un seuil prédéfini de température est compris entre 45°C et 51°C ou égal à l'une de ces valeurs, préférentiellement compris entre 46°C et 50°C ou égal à l'une de ces valeurs.

Cela permet avantageusement de constater un risque de légionellose important ou réduit et un risque d'entartrage important ou limité.

- La séquence de contrôle est envoyée à l'installation de production via l'un des compteurs divisionnaires de distribution d'eau.

Avantageusement, il est ainsi possible de simplifier l'organisation des communications sans fil dans l'installation de distribution d'eau chaude sanitaire.

- La condition de température de l'eau chaude sanitaire est déterminée de sorte que la valeur minimale des moyennes de températures obtenues est supérieure ou égale à un premier seuil de température prédéfini et la valeur maximale des moyennes de températures obtenues est inférieure ou égale à un deuxième seuil de température prédéfini, supérieur au premier seuil.

Avantageusement, il est possible de constater une absence de risque particulier au regard de la présence de légionnelles ou de tartre et d'organiser une action de maintenance préventive contre les légionnelles par élévation contrôlée de la température de production de l'eau selon un cycle court prédéfini.

- La condition de température de l'eau chaude sanitaire est déterminée de sorte que la valeur minimale des moyennes de températures obtenues est inférieure à un premier seuil de température prédéfini.

Avantageusement, il est possible de détecter un risque accru de légionelles et d'organiser une action adaptée par une élévation contrôlée de la température de production de l'eau chaude sanitaire.

- La condition de température de l'eau chaude sanitaire est déterminée de sorte que la valeur minimale des moyennes obtenues est supérieure ou égale à un premier seuil de température prédéfini et la valeur maximale des moyennes obtenues est supérieure à un deuxième seuil prédéfini, supérieur au premier seuil.

Avantageusement, il est ainsi possible de détecter un risque accru d'entartrage et d'opérer une baisse contrôlée de la température de production de l'eau.

- Le premier seuil de température est égal à 46°C et le deuxième seuil de température est égal à 50°C.

Avantageusement, la prévention d'apparition de légionnelles et de tartre est équilibrée, et donc optimisée.

L'invention a également pour objet une unité de gestion d'une installation de production d'eau chaude sanitaire comprenant des circuits électroniques configurés pour :

- obtenir des premières informations représentatives de températures moyennes de l'eau chaude distribuée, déterminées par plages horaires et mesurées par un ou plusieurs compteurs de distribution divisionnaires au cours d'une période de référence,
- obtenir une valeur minimale et une valeur maximale des premières informations,
- déterminer une condition de température de l'eau chaude distribuée à partir d'au moins la valeur maximale des moyennes de température obtenues ou la valeur minimale des moyennes de température obtenues, et d'au moins un seuil de température prédéfini, et,
- si la condition est remplie, envoyer une séquence de contrôle de la température de distribution vers l'installation de production.

L'invention concerne en outre un compteur divisionnaire de distribution d'eau chaude sanitaire, le compteur divisionnaire comprenant des circuits électroniques configurés pour :

- envoyer, vers une unité de gestion distante, des premières informations représentatives de températures moyennes de l'eau distribuée, déterminées par plages horaires et mesurées par le compteur divisionnaire lui-même ou par d'autres compteurs divisionnaires au cours d'une période de référence,
- recevoir une première séquence de contrôle depuis l'unité de gestion, en réponse aux premières informations,
- envoyer une deuxième séquence de contrôle, représentative de la première séquence de contrôle, vers une unité de production de l'eau chaude.

L'invention a de plus pour objet une installation de distribution d'eau chaude sanitaire comprenant une installation de production d'eau chaude, une unité de gestion de la température de production de l'eau chaude telle que précédemment décrite, et un compteur divisionnaire de distribution tel que décrit ci-avant.

Enfin, l'invention a pour objet un produit programme d'ordinateur comprenant des instructions de codes de programme pour exécuter les étapes du procédé précité, lorsque le programme est exécuté par un processeur, ainsi qu'un dispositif support de stockage d'informations comprenant un tel produit programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement une installation de distribution d'eau chaude sanitaire à partir d'une installation de production d'eau chaude vers des logements équipés de compteurs divisionnaires de distribution selon un mode de réalisation de l'invention ;

[Fig. 2] illustre une table d'informations représentatives de valeurs moyennes de température d'eau mesurées et transmises par un ou plusieurs compteurs de distribution d'eau de l'installation déjà représentée sur la Fig. 1, selon un mode de réalisation ;

[Fig. 3] est un ordinogramme représentant un procédé de contrôle de la température de production d'une eau chaude sanitaire dans l'installation déjà représentée sur la Fig.1, selon un mode de réalisation ;

[Fig. 4] est un ordinogramme représentant une première variante du mode de réalisation du procédé déjà représenté sur la Fig. 3 ;

[Fig. 5] est un ordinogramme représentant une deuxième variante du mode de réalisation du procédé déjà représenté sur la Fig. 3 ;

[Fig. 6] est un ordinogramme représentant une troisième variante du mode de réalisation du procédé déjà représenté sur la Fig. 3 ; et,

[Fig. 7] est un diagramme représentant l'architecture d'une unité de gestion d'une température de production d'eau chaude sanitaire configurée pour exécuter un procédé décrit dans l'une des Fig. 3, Fig. 4, Fig. 5 et Fig. 6.

EXPOSE DETAILLE DE MODES DE REALISATION

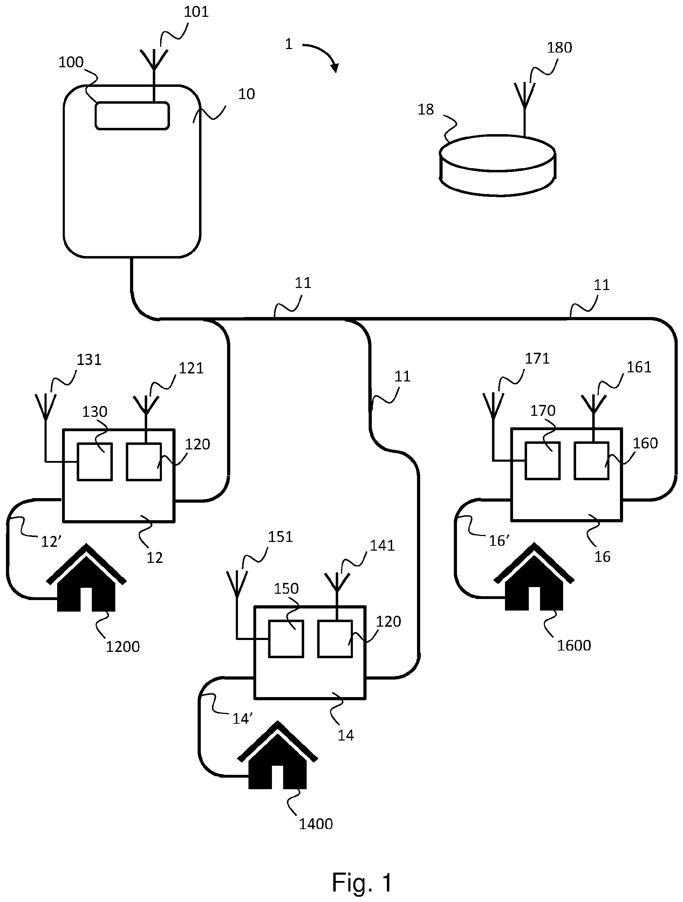

La Fig. 1 illustre schématiquement un système 1 de distribution d'eau chaude sanitaire à partir d'une installation de production d'eau chaude sanitaire 10 vers plusieurs installations 1200, 1400 et 1600 de consommation d'eau chaude sanitaire. Selon un mode de réalisation, l'installation de production d'eau chaude sanitaire 10 est une chaudière 10 comprenant une unité de contrôle de chaudière 100 contrôlable à distance au moyen d'une interface de communication sans fil 101, et les installations 1200, 1400 et 1600 de consommation d'eau chaude sanitaire sont des locaux à usage d'habitation tels que des maisons, par exemple. Les maisons 1200, 1400 et 1600 sont respectivement approvisionnées en eau chaude sanitaire à partir de la chaudière 10 jusqu'à des compteurs divisionnaires 12, 14 et 16 de distribution d'eau chaude sanitaire, à travers une installation de distribution 11 d'eau chaude sanitaire. Avantageusement, les compteurs de distribution divisionnaires 12, 14 et 16 comprennent chacun un identifiant unique dans l'installation, auquel ils sont respectivement associés en vue d'une identification ; cet identifiant étant défini de sorte que, plus le compteur est géographiquement éloigné de la chaudière 10, plus son identifiant est grand. Ainsi, il est possible de se référer rapidement

EP 4 047 277 B1

à l'identifiant d'un compteur de distribution divisionnaire pour déterminer si une température de distribution d'eau chaude sanitaire mesurée par ce compteur est censée être plutôt inférieure, plutôt supérieure ou plutôt sensiblement égale à celle mesurée par un autre compteur divisionnaire, plus ou moins éloigné de la chaudière 10. L'installation de distribution d'eau chaude sanitaire est principalement constituée d'une canalisation de distribution 11 configurée pour acheminer l'eau chaude sanitaire à partir de la chaudière 10 jusqu'aux maisons 1200, 1400 et 1600, ou plus précisément jusqu'aux compteurs de distribution divisionnaires 12, 14 et 16 de ces maisons. La chaudière 10 comprend classiquement des moyens de mesure de la température de l'eau chaude sanitaire à plusieurs endroits d'un réservoir et en particulier à la sortie de la chaudière 10, non loin de la connexion avec la canalisation de distribution 11. Cette température peut être transmise par la chaudière à un équipement distant. Les compteurs 12, 14 et 16 de distribution d'eau chaude sanitaire sont des compteurs de consommation dits « intelligents » (ou « smart meters », de l'anglais), notamment du fait de leurs capacités à opérer des mesures et à traiter localement des informations résultant de ces mesures, ainsi qu'à communiquer avec des équipements distants, tels qu'une unité de contrôle ou de gestion distante, une chaudière distante pourvue d'une unité de contrôle de chaudière contrôlable à distance, ou encore un système informatique de traitement et d'instrumentation du type communément appelé « SI », ces exemples étant non limitatifs. Dans la présente description sont nommés indifféremment « compteur de distribution » ou « compteur de consommation », ou encore « compteur de mesure de consommation » d'un fluide, tel que, par exemple, de l'eau chaude sanitaire, tout dispositif configuré pour mesurer au moins la consommation d'un fluide fourni vers une installation de consommation de ce fluide, tel qu'un logement à usage d'habitation, par exemple. Les compteurs de distribution d'eau chaude sanitaire 12, 14 et 16 comprennent chacun, outre une unité de contrôle interne configurée pour opérer notamment des mesures et contrôler des communications sans fil, au moins deux interfaces de communication. L'une de ces interfaces d'un compteur de distribution est configurée pour opérer des communications sans fil avec d'autres compteurs de distribution, notamment voisins, ou avec la chaudière 10 de production d'eau chaude sanitaire. L'autre de ces interfaces d'un compteur de distribution est configurée pour opérer notamment des communications sans fil avec une unité de gestion 18 de la production d'eau chaude sanitaire dans le système 1 de distribution d'eau chaude sanitaire. L'unité de gestion 18 de la production d'eau chaude sanitaire dans l'installation de distribution 1 est configurée pour opérer des fonctions de contrôle et de supervision de l'installation de distribution 1 d'eau chaude sanitaire, notamment de contrôle de la température de production de l'eau dans la chaudière 10 et plus largement tous les contrôles et toutes les opérations usuellement exécutées par un système de gestion communément décrit comme un SI. L'unité de gestion 18 de la production d'eau chaude sanitaire comprend une interface de communication sans fil 180. Ainsi, par exemple, l'unité de gestion 18 est configurée pour opérer des relevés réguliers de consommation de volumes d'eau chaude sanitaire, mais aussi pour la mise à jour de modules logiciels embarqués dans chacun des compteurs 12, 14 et 16 de consommation et de données utiles à l'exécution de ces modules logiciels.

L'ensemble de ces communications sans fil, d'une part entre les compteurs eux-mêmes, ou entre les compteurs et la chaudière, et entre les compteurs et l'unité de gestion 18 de production d'eau chaude sanitaire, d'autre part, ont donc vocation à participer au contrôle global de l'installation de distribution, supervisé par l'unité de gestion 18 opérant des fonctions de SI.

Ainsi, le compteur 12 de distribution d'eau chaude sanitaire, comprend une première interface de communication sans fil 120, pourvue d'un système antennaire 121 et une deuxième interface de communication 130 pourvue d'un système antennaire 131 ; le compteur 14 de distribution d'eau chaude sanitaire comprend une première interface de communication sans fil 140, pourvue d'un système antennaire 141 et une deuxième interface de communication 150 pourvue d'un système antennaire 151 et le compteur 16 de distribution d'eau chaude sanitaire comprend une première interface de communication sans fil 160, pourvue d'un système antennaire 161 et une deuxième interface de communication 170 pourvue d'un système antennaire 171. Les interfaces de communication sans fil 120, 140 et 160, respectivement couplées aux systèmes antennaires 121, 141 et 161 sont configurées pour opérer des communications sans fil avec la chaudière 10, par le biais de l'interface de communications sans fil 101 de l'unité de contrôle 100 de la chaudière 10. Ces interfaces sont configurées pour opérer des fonctions et protocoles de communication définis conformément à l'un des standards choisis parmi : WM-Bus, BLE, Zigbee, ou l'une de leurs évolutions respectives.

Les interfaces de communication sans fil 130, 150 et 170, respectivement couplées aux systèmes antennaires 131, 151 et 171 sont configurées pour opérer des communications sans fil avec l'unité de gestion 18 de type SI, par le biais de l'interface de communications sans fil 180 de l'unité de gestion 18. Ces interfaces sont configurées pour opérer des fonctions et protocoles de communication définis conformément à l'un des standards choisis parmi : WM-Bus, LoRA, NB-IoT, 4G, 5G, ou l'une de leurs évolutions respectives. Selon un mode de réalisation, chacun des compteurs 12, 14 et 16 de distribution est configuré pour pouvoir contrôler la température de production de l'eau de la chaudière 10, à partir d'informations reçues depuis l'unité de gestion 18. Selon une variante, un sous-ensemble seulement des compteurs 12, 14 et 16 de distribution comprend des compteurs de distribution configurés pour un contrôle de la température de production de l'eau de la chaudière 10, par exemple un seul compteur de distribution est configuré pour le contrôle de la température de production de la chaudière 10, encore appelé communément « pilotage de la chaudière ». Selon l'exemple décrit, le compteur de distribution divisionnaire 12 est dédié au contrôle de la température de production d'eau chaude sanitaire de la chaudière 10 et donc au pilotage de celle-ci. Les compteurs de distribution d'eau chaude sanitaire 12, 14 et 16 sont toutefois configurés pour communiquer entre eux. Chacun des compteurs contient un ensemble d'éléments mécaniques, électromécaniques, électriques et électroniques, dont un ou plusieurs capteurs de température pour mesurer une consommation d'eau chaude sanitaire et la température de l'eau chaude sanitaire localement distribuée au fil du temps. Chacun des compteurs comprend en outre des moyens d'horodatage configurés pour horodater les mesures réalisées avec une précision de l'ordre de la minute, ou préférentiellement de l'ordre de la seconde.

Il est à noter que les compteurs 12, 14 et 16 sont préférentiellement chacun disposés au plus près de la maison vers laquelle l'eau chaude qu'il distribue est délivrée, de sorte à pouvoir opérer une mesure la plus représentative de la température de l'eau réellement distribuée dans la maison. Ainsi, des canalisations privatives 12', 14' et 16', respectivement agencées entre les compteurs de distribution 12, 14 et 16 et les maisons 1200, 1400 et 1600 sont les plus courtes possibles afin de limiter les déperditions de chaleur dans ces canalisations et donc les disparités entre la température d'eau mesurée dans un compteur de distribution et la température de l'eau réellement fournie aux différents points de prélèvement de la maison reliée à ce compteur (un lavabo, un évier, une douche ou une baignoire, par exemple).

Selon un mode de réalisation, le compteur 12 est configuré pour contrôler la température de production de l'eau chaude sanitaire dans la chaudière 10, en émettant des séquences de contrôle de la température d'eau de production vers la chaudière. Une séquence de contrôle émise par le compteur de distribution 12 a vocation à opérer un ou plusieurs ajustements successifs de la température d'eau chaude sanitaire disponible en sortie de la chaudière. Une séquence de contrôle peut comprendre un ou plusieurs messages de contrôle. Par exemple, une séquence de contrôle peut comprendre un message de contrôle signifiant « établir la température de production de l'eau à 60° » ou encore « établir la température de production de l'eau à 46° ». De la même façon un message de contrôle émis par le compteur de distribution 12 vers la chaudière 10 peut signifier « augmenter la température de production de l'eau chaude sanitaire de 14°C » ou encore « réduire la température de l'eau chaude sanitaire de 5°C ». Une telle séquence de contrôle peut aussi comprendre un message contenant une ou plusieurs informations temporelles à traiter, comme, à titre d'exemple, « attendre 30 minutes », ou encore « attendre 45 minutes ». Ainsi des messages de contrôle peuvent être envoyés séquentiellement par le compteur de distribution divisionnaire 12 à la chaudière 10 ou encore sous la forme d'une séquence de contrôle comprenant une suite de messages de contrôle dont certains comprennent éventuellement une ou plusieurs informations temporelles. Par exemple, une séquence de contrôle émise par le compteur de distribution 12 vers la chaudière peut être : [« augmenter la température de production de l'eau chaude de 14°C » ; « attendre 30 minutes » ; « retour à la température initiale » ; « attendre 45 minutes » ; « établir la température de production de l'eau à 46°C »]. Un autre exemple de séquence de contrôle émise par le compteur de distribution 12 vers la chaudière 10 pourrait être, toujours à titre d'exemple [« établir la température de production de l'eau chaude à 60°C » ; « attendre 30 minutes » ; « retour à la température initiale »]. Selon un mode de réalisation, les messages de contrôle, et donc plus largement les séquences de contrôle entre le compteur de distribution 12 et la chaudière 10 sont codés sous forme d'octets pour limiter et simplifier les communications. Par exemple un octet « 0x01 » (en hexadécimal) d'un message de contrôle peut constituer un entête de message codant un type de contrôle à appliquer, tel que à titre d'exemple, « consigne de température » et un octet « 0x02 » d'entête peut signifier « consigne de température à appliquer pendant 30 minutes ». Ainsi des séquences de contrôle peuvent être très courtes. Par exemple, une séquence de contrôle peut ne contenir qu'un unique message de contrôle limité à un ou deux octets. La chaudière 10 est configurée pour émettre des messages d'accusé de réception d'une séquence de contrôle qui lui est adressée. Ainsi, par exemple, la chaudière 10 peut envoyer un message d'accusé de réception sous la forme d'un unique octet « 0x01 » valant accusé de réception d'une séquence de contrôle. Avantageusement, en cas de perturbations importantes, une séquence de contrôle sollicitant un redémarrage complet de la chaudière et de ses différents éléments, notamment son unité de contrôle interne 100, peut être sollicitée par le compteur de distribution 12.

L'unité de contrôle 100 interne de la chaudière 10 comprend des moyens de traitement des messages en provenance d'un ou plusieurs compteurs de distribution, notamment des moyens pour élire un compteur de distribution en tant que dispositif de programmation externe de la chaudière, des moyens de mémorisation des messages ou séquences de contrôle reçus et de traitement dans un ordre cohérent, ainsi que des moyens d'émission de message d'erreur ou d'alerte en cas de dysfonctionnement constaté.

Avantageusement, la chaudière 10 transmet régulièrement au compteur 12 la température de l'eau chaude sanitaire chauffée mesurée en sortie de chaudière, et le compteur de distribution 12 transmet cette température à l'unité de gestion 18 opérant des fonctions de SI.

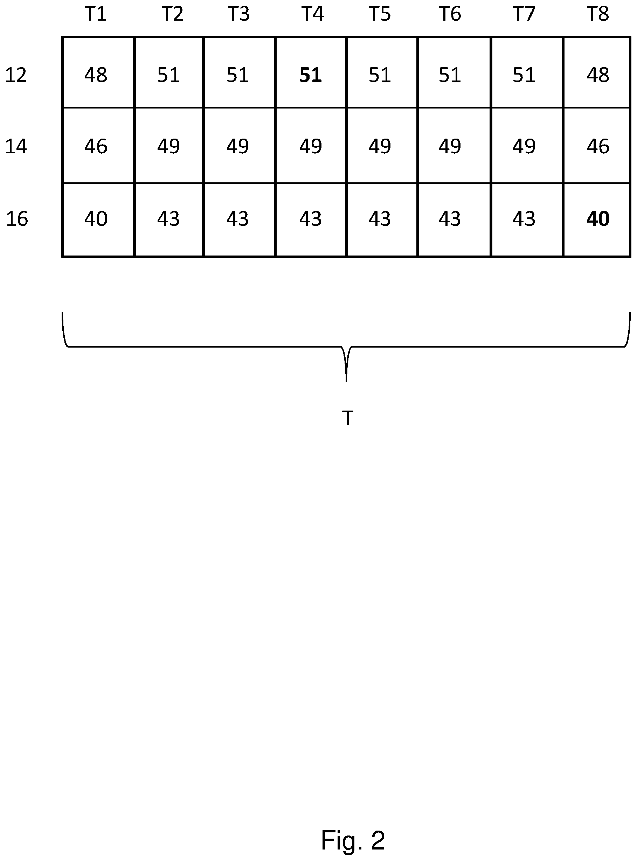

Selon un mode de réalisation de l'invention, chacun des compteurs de distribution 12, 14 et 16 transmettent à intervalles réguliers à l'unité de gestion 18 la température de l'eau distribuée mesurée dans le compteur. Selon une variante, les compteurs enregistrent des mesures de température et les transmettent ensuite par lots à l'unité de gestion 18 de la température de production d'eau chaude dans la chaudière 10. Selon une autre variante, les compteurs 14 et 16 transmettent régulièrement des températures mesurées au compteur de distribution 12 qui les transmet ensuite, régulièrement ou par lots à l'unité de gestion 18. Quelle que soit l'implémentation choisie pour la transmission des mesures de température réalisées par les compteurs de distribution vers l'unité de gestion 18, les mesures de températures sont horodatées, de sorte que l'unité de gestion 18 obtienne des premières informations représentatives de températures moyennes de l'eau chaude sanitaire distribuée à partir de la chaudière 10, déterminées par plages horaires d'une durée prédéfinie et mesurées par les compteurs de distributions 12, 14, et 16 au cours d'une période de référence. L'exemple décrit comprend les trois compteurs 12, 14 et 16 de distribution d'eau chaude sanitaire, mais il est à noter que le système de contrôle de la production d'eau chaude est configuré pour opérer même si un seul compteur d'eau chaude est opérationnel dans le système. Selon un mode de réalisation, la période de référence est de quelques jours, préférentiellement, la période de référence est égale à une journée, considérée à partir d'une heure prédéfinie, jusqu'à la même heure le lendemain. Avantageusement, les plages horaires prédéfinies ont une durée égale à 3 heures sans toutefois que ce choix soit limitatif. Ainsi, l'unité de gestion peut disposer des premières informations de moyennes de températures mesurées par les compteurs de distribution divisionnaires 12, 14 et 16, par plages horaires, tel que représenté sur la Fig. 2. Les lignes du tableau de la Fig. 2 comprennent des valeurs de températures moyennes mesurées par plages horaires T1 à T8. Les colonnes du tableau représenté correspondent donc aux plages horaires T1 à T8 se succédant au cours de la période de référence T, soit une journée selon l'exemple décrit. Les températures sont indiquées en degrés °C et il peut donc être constaté que, selon l'exemple décrit, pour la période de référence ayant permis de mesurer les valeurs représentées, la température moyenne minimale $\theta$min mesurée par un compteur de distribution est égale à 40°C et la température moyenne maximale $\theta$max mesurée par un compteur de distribution est égale à 51°C.

Ces informations représentatives de températures moyennes de l'eau chaude produite puis distribuée dans les maisons 1200, 1400 et 1600 sont déterminées par plages horaires pour des plages horaires T1, T2, T3, T4, T5, T6, T7 et T8 d'une durée de 3 heures chacune et se succédant au fil d'une période de référence d'une journée. Ainsi, par exemple, T1 s'étend de 0h à 3h ; T2 s'étend de 3h à 6h ; T3 s'étend de 6h à 9h et ainsi de suite jusqu'à T8 qui s'étend de 21h à minuit (ou 0h du lendemain), toutes ces plages horaires se succédant sur la période de référence T définie de 0h à minuit. L'unité de gestion 18 disposant de ces valeurs est alors apte à déterminer une valeur minimale $\theta$min des températures moyennes reçues et une valeur maximale $\theta$max de ces mêmes températures moyennes, par exemple au moyen d'une simple opération de tri de chaque occurrence des valeurs moyennes. L'unité de gestion 18 peut ainsi avantageusement établir ensuite une ou plusieurs conditions de distribution de l'eau chaude sanitaire qui présente un intérêt particulier en termes de détection, à partir d'au moins l'une de ces valeurs $\theta$min et $\theta$max et d'au moins un seuil de température prédéfini significatif. Par exemple, l'unité de gestion 18 peut analyser la situation à partir des valeurs $\theta$min et/ou $\theta$max au regard d'un ou plusieurs seuils de température prédéterminés ayant du sens en termes de prévention contre des risques sanitaires et/ou techniques. A titre d'exemple, une valeur minimale d'eau distribuée en deçà d'une température de 46°C entraîne un risque de légionellose pour les occupants d'une maison dont le compteur a mesuré cette température d'eau chaude distribuée. Toujours à titre d'exemple, une température maximale au-delà de 50°C entraîne un risque accru d'entartrage de l'installation dans une maison dont le compteur a mesuré cette température d'eau chaude distribuée. Ainsi, il peut être avantageux de définir un seuil L1 de température à 46°C, par exemple, ou encore un seuil L2 à 50°C, ou à des températures proches de ces valeurs, par exemple, dans un intervalle de valeurs comprises entre 45°C et 51°C.

L'établissement d'une condition permet alors avantageusement d'analyser la situation au regard d'un critère précis, tel que le risque de légionellose ou le risque d'un entartrage conséquent. Une condition peut en outre viser à vérifier simplement s'il n'existe ni risque de légionellose, ni même un risque accru d'entartrage, par exemple en établissant une condition qui comprenne les termes $\theta$min, $\theta$max, et des seuils L1 et L2 respectivement définis à 46°C et 50°C. Une telle condition peut être :

$\theta$min >= L1 et $\theta$max <= L2 , où L1 est prédéfini à 46°C et L2 est prédéfini à 50°C.

Cette condition, lorsqu'elle est remplie (en d'autres termes satisfaite ou vérifiée) peut être exprimée littéralement par *« le minimum des températures d'eau chaude réellement distribuée est supérieur à une température seuil à partir de laquelle la prolifération des légionnelles est limitée, et le maximum des températures d'eau chaude réellement distribuée est inférieur à la température seuil à partir de laquelle un risque d'entartrage accru est substantiel »*. Il est ainsi possible d'en déduire une situation de distribution satisfaisante.

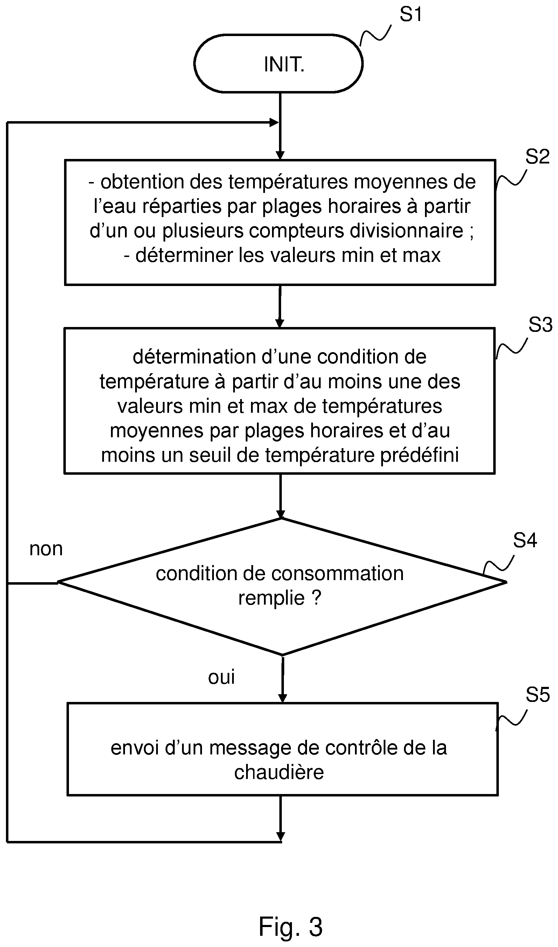

La Fig. 3 illustre un procédé de contrôle de la température de production selon un mode de réalisation de l'invention. Dans la présente description, on considère indifféremment un contrôle de la température de production et un contrôle de la température de distribution dans la mesure où, avantageusement et grâce aux mesures réalisées selon le procédé, un contrôle de la température de production permet un contrôle de la température de distribution. Il est d'ailleurs avantageusement possible de mesurer le temps d'élévation, de la température dans un compteur à partir du temps d'élévation de la consigne de la température de production dans la chaudière, ce qui permet d'obtenir une connaissance au moins approximative de l'état technique du réseau. Une étape S1 est une étape d'initialisation ou de mise en service de l'installation 1 de distribution d'eau chaude sanitaire au terme de laquelle tous les dispositifs de l'installation 1 sont normalement opérationnels et en capacité d'interagir les uns avec les autres. En particulier, les compteurs divisionnaires intelligents de distribution d'eau 12, 14 et 16 sont opérationnels, l'unité de gestion 18 prévue pour le contrôle de la température de production de l'eau est opérationnelle et la chaudière est opérationnelle et contient une eau chaude à une température de plusieurs dizaines de degrés °C.

Lors d'une étape S2, les compteurs de distribution 12, 14 et 18 opèrent chacun des mesures locales et horodatées de la température de l'eau distribuée et les enregistrent dans une mémoire interne, par plages horaires de 3h, tout au long d'une période de référence d'une journée, puis déterminent chacun des valeurs moyennes par plages horaires et transmettent ces températures moyennes par plages horaires à l'unité de gestion 18, distante. Cette transmission est opérée soit directement vers l'unité de gestion distante 18, soit par l'intermédiaire d'un des compteurs, dédié à cet effet. Ainsi, lors de cette étape S2, l'unité de gestion 18, qui exécute le procédé, obtient les valeurs moyennes de températures, déterminées par plages horaires au cours de la période de référence d'une journée puis détermine quelle est la plus basse de ces moyennes de température mesurées, θmin, et quelle est la plus élevée de ces moyennes de température mesurées, θmax. Lors d'une étape S3, l'unité de gestion 18 détermine, à partir d'au moins l'une de ces valeurs minimale θmin et maximale θmax, une condition représentative d'une situation d'intérêt en termes de prévention pour l'installation de distribution 1 d'eau chaude sanitaire. Par exemple, une condition de mauvais fonctionnement de l'élément de chauffe peut être établie et exprimée par :

$$\theta max < (L1 = 40°C)$$

Ce qui signifie, si la condition ainsi déterminée est remplie, que l'eau chaude sanitaire présente une température trop basse au regard des usages domestiques usuels.

La condition prédéterminée lors de l'étape S3 est alors testée (ou vérifiée) lors d'une étape S4, de sorte que, si la condition est remplie, une séquence de contrôle est alors émise lors d'une étape S5 depuis l'unité de gestion 18, vers la chaudière 10, par l'intermédiaire du compteur de distribution 12 qui est configuré pour piloter la chaudière 10 à partir de l'unité de gestion 18. En d'autres termes, le compteur de distribution 12 opère des fonctions de relais entre l'unité de gestion 18 et la chaudière 10. Cette séquence de contrôle est par exemple : [augmenter la température de production jusqu'à 46°C ; réguler la température de production à 47°C +/- 1°C].

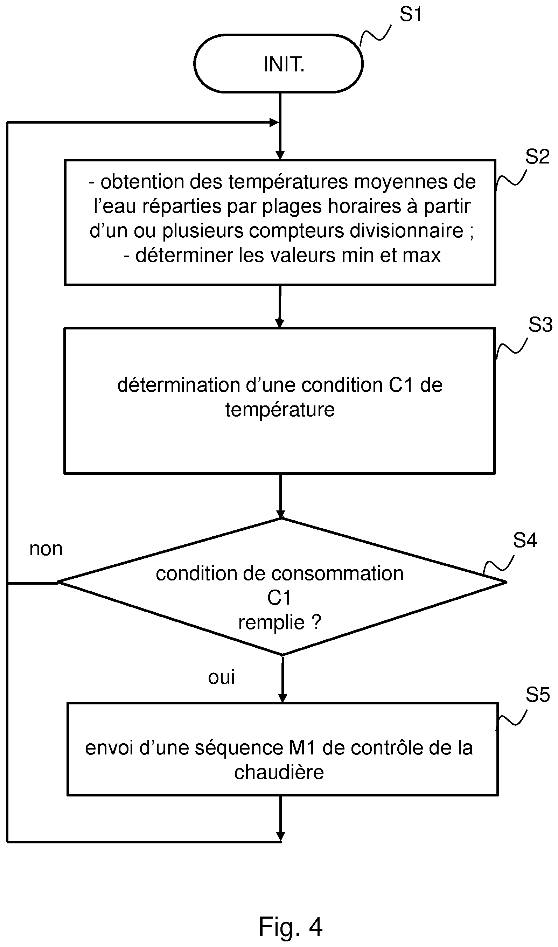

La Fig. 4 représente un procédé de contrôle de la distribution de l'eau dans l'installation de distribution 1, similaire à celui déjà décrit en relation avec la Fig.3, et dans lequel une condition de bonne distribution de l'eau chaude est déterminée pour vérifier que la distribution est optimale au regard des risques de légionellose et d'entartrage. Les étapes S1 et S2 sont similaires à celles du procédé déjà décrit en relation avec la Fig. 3.

A l'étape S3 est déterminée la condition C1 :

$$\theta min >= (L1 = 46°C) \text{ et } (\theta max <= (L2 = 50°C))$$

La condition C1 est alors testée à l'étape S4 de sorte que si la condition est remplie, une séquence de contrôle M1 est adressée à la chaudière 10, lors d'une étape S5, par l'intermédiaire du compteur de distribution 12. La séquence de contrôle M1 est alors ainsi déterminée :

M1 : [augmentation de la température de production de (60°C - θmin) pendant 30 minutes ; retour à la température initiale].

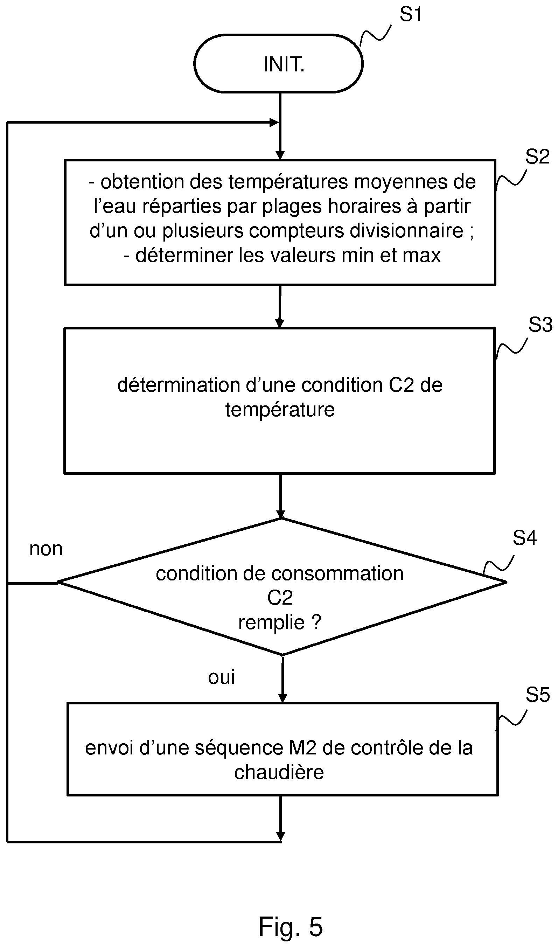

La Fig. 5 représente un procédé de contrôle de la distribution de l'eau similaire à celui déjà représenté en relation avec la Fig. 3, dans lequel une condition de distribution défavorable au regard des risques de légionellose est déterminée à l'étape S3 et testée à l'étape S4. Les étapes S1 et S2 sont similaires à celles du procédé déjà décrit en relation avec la Fig.3.

A l'étape S3 est déterminée la condition C2 :

$$\theta min < (L1 = 46°C)$$

La condition C2 est alors testée à l'étape S4 de sorte que si la condition est remplie, une séquence de contrôle M2 est adressée à la chaudière 10, lors d'une étape S5, par l'intermédiaire du compteur de distribution 12. La séquence de contrôle M2 est alors ainsi déterminée :

M2 : [augmentation de la température de production de (60°C - θmin) pendant 30 minutes ; retour à la température initiale ; attente de 45 minutes ; augmentation de la température de production de (46°C - θmin)].

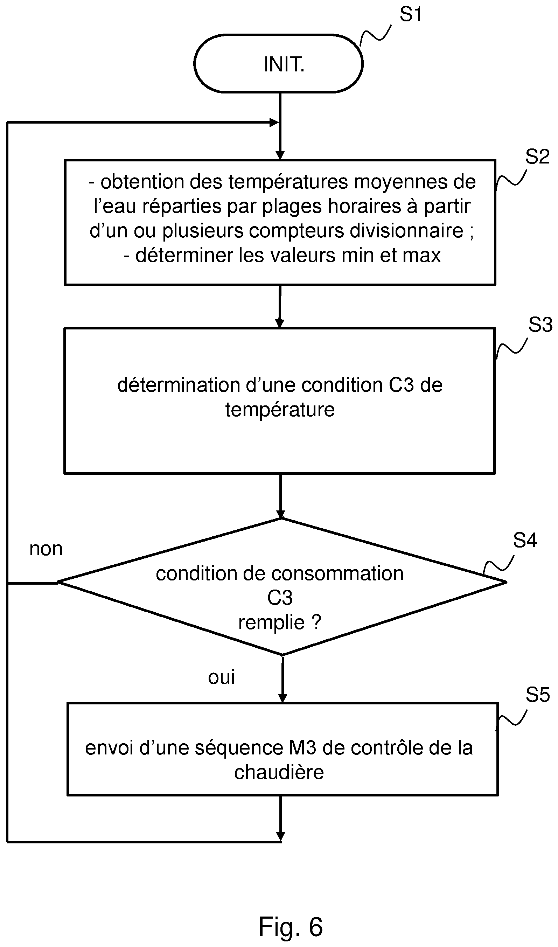

La Fig. 6 représente un procédé de contrôle de la distribution de l'eau similaire à celui déjà décrit en relation avec la Fig. 3, dans lequel une condition de distribution défavorable au regard de risques accrus d'entartrage est déterminée à l'étape S3 et testée à l'étape S4. Les étapes S1 et S2 sont similaires à celles du procédé déjà décrit en relation avec la Fig.3.

A l'étape S3 est déterminée la condition C3 :

$$(\theta min >= (L1 = 46°C)) \text{ et } (\theta max > (L2 = 50°C))$$

La condition C3 est alors testée à l'étape S4 de sorte que si la condition est remplie, une séquence de contrôle M3 est adressée à la chaudière 10, lors d'une étape S5, par l'intermédiaire du compteur de distribution 12. La séquence de contrôle M3 est alors ainsi déterminée :
M3 : [ augmentation de la température de production de (60°C - $\theta$min) pendant 30 minutes ; retour à la température initiale ; attente de 45 minutes ; diminution de la température de production de ($\theta$min - 46°C) ].

Selon un mode de réalisation particulier de l'invention, un procédé de contrôle de la température de production de l'eau chaude sanitaire dans l'installation de distribution 1 peut comprendre plusieurs suites d'étapes S3, S4, S5 visant à tester successivement plusieurs conditions de distribution d'eau, et à mener des actions correctives de façon ordonnancée en fonction des résultats de test pour chaque condition testée, le cas échéant. Par exemple, un procédé peut comprendre d'abord des étapes S3, S4 tel que décrites en rapport avec la Fig. 4 et, si la condition C1 est remplie, alors l'étape S5 du procédé décrit en relation avec la Fig. 4 est exécutée, sinon le procédé exécute les étapes S3 et S4 du procédé décrit en relation avec la Fig. 5 puis, si la condition C2 est remplie, l'étape S5 du procédé décrit en relation avec la Fig. 5 est exécutée, et sinon les étapes S3 et S4 en relation avec le procédé décrit en relation avec la Fig. 6 sont exécutées, et éventuellement celle de l'étape S5 du même procédé décrit en relation avec la Fig. 6. Ainsi, les trois conditions C1, C2 et C3 sont chacune potentiellement exécutées lors de l'exécution d'un tel procédé. Il est à noter que ce séquencement permet d'établir une priorité de traitement contre les risques de légionellose au regard du traitement contre les risques accrus d'entartrage. Avantageusement, chacun des procédés respectivement décrits en relation avec les Fig. 4, Fig. 5 et Fig. 6 est exécuté au moins une fois par période de référence, soit en l'occurrence de façon journalière, pour mieux prévenir les risques de légionellose et d'entartrage.

Selon un mode de réalisation, il est possible de détecter qu'un logement est inoccupé de manière prolongée, lorsque la consommation d'eau chaude détectée par un compteur de distribution divisionnaire 12, 14, 16 associé audit logement est inférieure à un seuil prédéfini de consommation pendant une période d'une première durée prédéfinie. Le seuil prédéfini de consommation est par exemple de 30 L, préférentiellement de 20 L ou encore de manière plus préférentielle de 10 L, et la période de première durée prédéfinie est par exemple de sept jours ou selon un autre exemple de 2 à 4 semaines. Il est en outre possible de détecter qu'un logement inoccupé est à nouveau occupé dès que la consommation d'eau chaude détectée par le compteur de distribution divisionnaire 12, 14, 16 associé audit logement dépasse le seuil prédéfini de consommation sur un intervalle de temps inférieur à une deuxième durée prédéfinie. Par exemple, un logement inoccupé pour lequel une consommation d'eau dépasse 10 L sur un intervalle d'une heure est à nouveau considéré comme occupé. Dès qu'un logement inoccupé est détecté comme à nouveau occupé, les valeurs de température moyenne minimale $\theta$min et de température moyenne maximale $\theta$max sont forcées à des valeurs respectives égales aux seuils L1 et L2 de température, définis par exemple respectivement à 46°C et 50°C. Ainsi, lorsque l'unité de gestion 18 teste les conditions C1, C2, C3 de consommation à l'étape S4, la condition C1 est automatiquement remplie, ce qui entraîne, à l'étape S5, l'émission d'une séquence de contrôle M1 associée à la condition C1. Autrement dit l'unité de gestion envoie la séquence de contrôle M1 générant l'augmentation de la température de production de (60°C - $\theta$min) pendant 30 minutes avant un retour à la température initiale, de sorte à éliminer les légionelles qui ont pu se développer pendant l'inoccupation du logement.

Ainsi, l'invention permet, lors de la détection d'une occupation d'un logement après une absence prolongée dans ledit logement, d'éliminer des légionelles éventuelles en forçant l'envoi d'une séquence de contrôle prédéterminée de la température de distribution à la chaudière 10 par l'intermédiaire du compteur de distribution 12, 14, 16 associé audit logement.

Avantageusement, si l'unité de gestion 18 obtient des premières valeurs représentatives de moyennes de température d'eau distribuée, réparties par plages horaires qui semblent incohérentes, elle peut solliciter une mesure instantanée, à partir de l'ensemble des compteurs de distribution divisionnaires 12, 14 et 16 de l'installation de distribution 1 et opérer un procédé idoine sur ces informations valant alors premières informations au sens du procédé tel que précédemment décrit. Avantageusement, si des informations de températures ne peuvent être obtenues pour une ou plusieurs périodes de référence, successives ou non, ces informations sont alors remplacées par les dernières informations de température obtenues en provenance de ce compteur. En outre, si un compteur n'a pas pu délivrer d'informations de températures pendant un nombre de périodes de référence excédant un seuil prédéterminé, tel que par exemple une semaine, les informations en provenance du compteur de distribution le plus proche du compteur présumé défectueux sont utilisées.

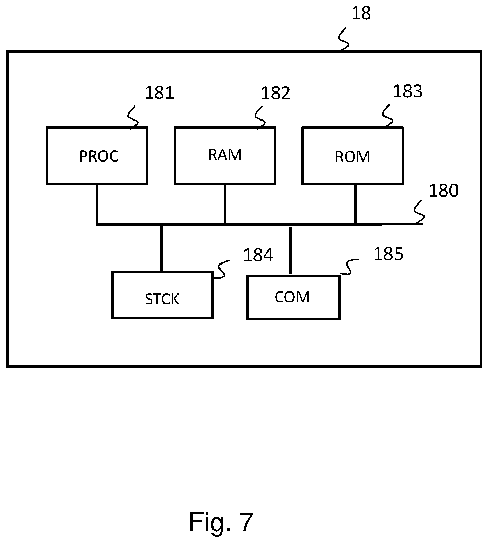

La Fig. 7 illustre schématiquement un exemple d'architecture interne de l'unité de gestion 18 supervisant la production, et donc la distribution, d'eau chaude sanitaire dans la chaudière 10. L'architecture représentée peut également représenter l'architecture interne d'un compteur de distribution divisionnaire parmi les compteurs de distribution 12, 14 et 16 ou encore l'architecture de l'unité de contrôle 100 de la chaudière 10.

Selon l'exemple d'architecture matérielle représenté à la Fig. 7, l'unité de gestion 18 de contrôle de production d'eau chaude sanitaire comprend alors, reliés par un bus de communication 186 : un processeur ou CPU (« Central Processing Unit » en anglais) 181 ; une mémoire vive RAM (« Random Access Memory » en anglais) 182 ; une mémoire morte ROM (« Read Only Memory » en anglais) 183 ; une unité de stockage telle qu'un disque dur (ou un lecteur de support de stockage, tel qu'un lecteur de cartes SD (« Secure Digital » en anglais) 184 ; au moins une interface de communication 180 permettant à l'unité de gestion 18 de communiquer avec des dispositifs distants tels que les compteurs 12, 14 et 16 de distribution ou encore la chaudière 10, par le biais de son unité de contrôle interne 100.

Le processeur 181 est capable d'exécuter des instructions chargées dans la RAM 182 à partir de la ROM 183, d'une mémoire externe (non représentée), d'un support de stockage (tel qu'une carte SD), ou d'un réseau de communication. Lorsque l'unité de gestion 18 est mise sous tension, le processeur 181 est capable de lire de la RAM 182 des instructions et de les exécuter. Ces instructions forment un programme d'ordinateur causant la mise en œuvre, par le processeur 181, d'une partie d'un procédé décrit en relation avec les Fig. 3, Fig. 4, Fig. 5 et Fig. 6.

Tout ou partie du procédé implémenté par l'unité de gestion 18, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'unité de gestion 18 comprend de la circuiterie électronique configurée pour mettre en œuvre le procédé décrit en relation avec lui-même ainsi qu'avec des équipements tiers distants, et qu'avec tout autre dispositif impliqué dans l'exécution du procédé de contrôle de la température de production d'eau chaude sanitaire décrit. Bien évidemment, l'unité de gestion 18 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

L'invention ne se limite pas aux seuls modes de réalisation décrits mais concerne plus largement tout procédé de contrôle d'une température de production et de distribution d'une eau chaude sanitaire comprenant des étapes pour : obtenir des températures moyennes d'eau chaude distribuée, déterminées par plages horaires et mesurées par un ou plusieurs compteurs de distribution divisionnaires au cours d'une période de référence ; déterminer des valeurs minimales et maximales de ces moyennes observées sur la période de référence et déterminer à partir d'au moins l'une de ces valeurs, et d'au moins un seuil de température significatif, une ou plusieurs conditions de distribution d'eau de sorte que, si la condition établie est remplie, une séquence de contrôle de la température de production de l'eau soit envoyée à l'installation de production, directement ou par l'intermédiaire d'un équipement relais tel qu'un compteur divisionnaire.

## Revendications

1. Procédé de contrôle d'une température de distribution d'eau chaude sanitaire, le procédé étant exécuté dans une unité de gestion (18) d'une installation de production (10) de ladite eau chaude et comprenant:

   - obtenir (S2) des premières informations représentatives de températures moyennes de ladite eau chaude distribuée, déterminées par plages horaires (T1, T2, ..., T8), et mesurées par un ou plusieurs compteurs de distribution divisionnaires (12, 14, 16) au cours d'une période de référence (T),
   - obtenir (S2) une valeur minimale ($\theta$min) et une valeur maximale ($\theta$max) desdites premières informations,
   - déterminer une condition (C1, C2, C3) de température de ladite eau chaude distribuée à partir d'au moins ladite valeur maximale ($\theta$max) ou d'au moins ladite valeur minimale ($\theta$min), et d'au moins un seuil (L1, L2) de température prédéfini, et,
   - si ladite condition (C1, C2, C3) est remplie, envoyer une séquence de contrôle de ladite température de distribution vers ladite installation de production (10).

2. Procédé de contrôle d'une température de distribution d'eau chaude sanitaire selon la revendication précédente dans laquelle ledit au moins un seuil (L1, L2) prédéfini de température est compris entre 45°C et 51°C ou égal à l'une de ces valeurs, préférentiellement compris entre 46°C et 50°C ou égal à l'une de ces valeurs.

3. Procédé de contrôle d'une température de distribution d'eau chaude sanitaire selon l'une des revendications 1 et 2 dans lequel ladite séquence de contrôle est envoyée à ladite installation de production via l'un desdits compteurs (12, 14, 16) de distribution d'eau.

4. Procédé de contrôle d'une température de distribution d'eau chaude sanitaire selon l'une des revendications 1 à 3 dans lequel ladite condition (C1) de température de ladite eau chaude sanitaire est déterminée de sorte que ladite valeur minimale ($\theta$min) est supérieure ou égale à un premier seuil (L1) de température prédéfini et ladite valeur maximale ($\theta$max) est inférieure ou égale à un deuxième seuil (L2) de température prédéfini, supérieur audit premier seuil (L1).

5. Procédé de contrôle d'une température de distribution d'eau chaude sanitaire selon la revendication 4, chaque compteur de distribution divisionnaire étant associé à un logement, le procédé comportant:

- détecter qu'un logement est inoccupé lorsqu'une consommation d'eau chaude mesurée par un compteur de distribution divisionnaire associé audit logement est inférieure à un seuil prédéfini de consommation sur une période de première durée prédéfinie,
- détecter qu'un logement inoccupé est à nouveau occupé lorsque la consommation d'eau chaude mesurée par un compteur de distribution divisionnaire associé audit logement dépasse le seuil de consommation prédéfini sur une période de deuxième durée prédéfinie,
- forcer la valeur de température moyenne minimale (θmin) à une valeur égale au premier seuil (L1) prédéfini de température, et forcer la valeur de température moyenne maximale (θmax) à une valeur égale au deuxième seuil (L2) prédéfini de température, pour chaque compteur de distribution divisionnaire dont le logement a été précédemment détecté comme inoccupé puis détecté comme à nouveau occupé.

6. Procédé de contrôle d'une température de distribution d'eau chaude sanitaire selon l'une des revendications 1 à 3 dans lequel ladite condition (C2) de température de ladite eau chaude sanitaire est déterminée de sorte que ladite valeur minimale (θmin) est inférieure à un premier seuil de température prédéfini (L1).

7. Procédé de contrôle d'une température de distribution d'eau chaude sanitaire selon l'une des revendications 1 à 3 dans lequel ladite condition (C3) de température de ladite eau chaude sanitaire est déterminée de sorte que ladite valeur minimale (θmin) est supérieure ou égale à un premier seuil de température prédéfini (L1) et ladite valeur maximale (θmax) est supérieure à un deuxième seuil prédéfini (L2), supérieur audit premier seuil.

8. Procédé de contrôle d'une température de distribution d'eau chaude sanitaire selon l'une des revendications 4 à 7 dans lequel ledit premier seuil de température est égal à 46°C et ledit second seuil de température est égal à 50°C.

9. Unité de gestion (18) d'une installation de production (10) d'eau chaude sanitaire comprenant des circuits électroniques configurés pour :

- obtenir (S2) des premières informations représentatives de températures moyennes de ladite eau chaude distribuée, déterminées par plages horaires (T1, T2, ..., T8) et mesurées par un ou plusieurs compteurs de distribution divisionnaires (12, 14, 16) au cours d'une période de référence (T),
- obtenir (S2) une valeur minimale (θmin) et (S2) une valeur maximale (θmax) desdites premières informations,
- déterminer (S3) une condition (C1, C2, C3) de température de ladite eau chaude distribuée à partir d'au moins ladite valeur maximale (θmax) ou ladite valeur minimale (θmin), et d'au moins un seuil de température prédéfini (L1, L2), et,
- si ladite condition (C1, C2, C3) est remplie (S4), envoyer (S5) une séquence de contrôle de ladite température de distribution vers ladite installation de production (10).

10. Compteur divisionnaire (12, 14, 16) de distribution d'eau chaude sanitaire, le compteur divisionnaire comprenant des circuits électroniques configurés pour :

- envoyer, vers l'unité de gestion (18) selon la revendication 9, distante, des premières informations représentatives de températures moyennes de ladite eau distribuée, déterminées par plages horaires (T1, T2, ..., T8) et mesurées par le compteur divisionnaire lui-même ou par d'autres compteurs divisionnaires (12, 14, 16) au cours d'une période de référence (T),
- recevoir une première séquence de contrôle depuis ladite unité de gestion (18), en réponse auxdites premières informations,
- envoyer une deuxième séquence de contrôle, représentative de ladite première séquence de contrôle, vers une unité de production (10) de ladite eau chaude.

11. Installation (1) de distribution d'eau chaude sanitaire comprenant une installation de production d'eau chaude (10), une unité de gestion (18) selon la revendication 9, et un compteur divisionnaire de distribution d'eau chaude sanitaire selon la revendication 10.

12. Produit programme d'ordinateur **caractérisé en ce qu'**il comprend des instructions de codes de programme pour exécuter les étapes du procédé selon l'une quelconque des revendications 1 à 8, lorsque ledit programme est exécuté par un processeur.

13. Support de stockage d'informations comprenant un produit programme d'ordinateur selon la revendication précédente.

**Patentansprüche**

1. Verfahren zur Steuerung einer Warmwasserabgabetemperatur, wobei das Verfahren in einer Verwaltungseinheit (18) einer Erzeugungsanlage (10) für das Warmwasser ausgeführt wird und umfasst:

   - Erhalten (S2) von ersten Informationen, die für mittlere Temperaturen des abgegebenen Warmwassers repräsentativ sind, die nach Zeitbereichen (T1, T2, ..., T8) bestimmt werden und von einem oder mehreren Abgabeunterzählern (12, 14, 16) während eines Referenzzeitraums (T) gemessen werden,
   - Erhalten (S2) eines kleinsten Werts ($\theta$min) und eines größten Werts ($\theta$max) der ersten Informationen,
   - Bestimmen einer Temperaturbedingung (C1, C2, C3) für das abgegebene Warmwasser ausgehend von mindestens dem größten Wert ($\theta$max) oder von mindestens dem kleinsten Wert ($\theta$min) und von mindestens einem vorgegebenen Temperaturschwellenwert (L1, L2), und,
   - wenn die Bedingung (C1, C2, C3) erfüllt ist, Senden einer Sequenz zur Steuerung der Abgabetemperatur an die Erzeugungsanlage (10).

2. Verfahren zur Steuerung einer Warmwasserabgabetemperatur nach dem vorhergehenden Anspruch, wobei der mindestens eine vorgegebene Temperaturschwellenwert (L1, L2) zwischen 45 °C und 51 °C liegt oder gleich einem dieser Werte ist,
   bevorzugt zwischen 46 °C und 50 °C liegt oder gleich einem dieser Werte ist.

3. Verfahren zur Steuerung einer Warmwasserabgabetemperatur nach einem der Ansprüche 1 und 2, wobei die Sequenz zur Steuerung über einen der Wasserabgabezähler (12, 14, 16) an die Erzeugungsanlage gesendet wird.

4. Verfahren zur Steuerung einer Warmwasserabgabetemperatur nach einem der Ansprüche 1 bis 3, wobei die Temperaturbedingung (C1) für das Warmwasser so bestimmt wird, dass der kleinste Wert ($\theta$min) größer oder gleich einem ersten vorgegebenen Temperaturschwellenwert (L1) ist und der größte Wert ($\theta$max) kleiner oder gleich einem zweiten vorgegebenen Temperaturschwellenwert (L2) ist, der größer als der erste Schwellenwert (L1) ist.

5. Verfahren zur Steuerung einer Warmwasserabgabetemperatur nach Anspruch 4, wobei jeder Abgabeunterzähler einer Wohnung zugeordnet ist, wobei das Verfahren umfasst:

   - Detektieren, dass eine Wohnung unbewohnt ist, wenn ein Warmwasserverbrauch, der von einem der Wohnung zugeordneten Abgabeunterzähler gemessen wird, über einen Zeitraum mit einer ersten vorgegebenen Dauer kleiner als ein vorgegebener Verbrauchsschwellenwert ist,
   - Detektieren, dass eine unbewohnte Wohnung wieder bewohnt ist, wenn der Warmwasserverbrauch, der von einem der Wohnung zugeordneten Abgabeunterzähler gemessen wird, über einen Zeitraum mit einer zweiten vorgegebenen Dauer den vorgegebenen Verbrauchsschwellenwert überschreitet,
   - Erzwingen des kleinsten mittleren Temperaturwerts ($\theta$min) auf einen Wert gleich dem ersten vorgegebenen Temperaturschwellenwert (L1) und Erzwingen des größten mittleren Temperaturwerts ($\theta$max) auf einen Wert gleich dem zweiten vorgegebenen Temperaturschwellenwert (L2) für jeden Abgabeunterzähler, dessen Wohnung zuvor als unbewohnt detektiert worden ist und dann als wieder bewohnt detektiert wurde.

6. Verfahren zur Steuerung einer Warmwasserabgabetemperatur nach einem der Ansprüche 1 bis 3, wobei die Temperaturbedingung (C2) für das Warmwasser so bestimmt wird, dass der kleinste Wert ($\theta$min) kleiner als ein erster vorgegebener Temperaturschwellenwert (L1) ist.

7. Verfahren zur Steuerung einer Warmwasserabgabetemperatur nach einem der Ansprüche 1 bis 3, wobei die Temperaturbedingung (C3) für das Warmwasser so bestimmt wird, dass der kleinste Wert ($\theta$min) größer oder gleich einem ersten vorgegebenen Temperaturschwellenwert (L1) ist und der größte Wert ($\theta$max) größer als ein zweiter vorgegebener Schwellenwert (L2) ist, der größer als der erste Schwellenwert ist.

8. Verfahren zur Steuerung einer Warmwasserabgabetemperatur nach einem der Ansprüche 4 bis 7, wobei der erste Temperaturschwellenwert 46 °C beträgt und wobei der zweite Temperaturschwellenwert 50 °C beträgt.

9. Verwaltungseinheit (18) einer Erzeugungsanlage (10) für Warmwasser, die elektronische Schaltkreise umfasst, die ausgestaltet sind zum:

    - Erhalten (S2) von ersten Informationen, die für mittlere Temperaturen des abgegebenen Warmwassers repräsentativ sind, die nach Zeitbereichen (T1, T2, ..., T8) bestimmt werden und von einem oder mehreren Abgabeunterzählern (12, 14, 16) während eines Referenzzeitraums (T) gemessen werden,
    - Erhalten (S2) eines kleinsten Werts (θmin) und (S2) eines größten Werts (θmax) der ersten Informationen,
    - Bestimmen (S3) einer Temperaturbedingung (C1, C2, C3) für das abgegebene Warmwasser ausgehend von mindestens dem größten Wert (θmax) oder dem kleinsten Wert (θmin) und von mindestens einem vorgegebenen Temperaturschwellenwert (L1, L2), und,
    - wenn die Bedingung (C1, C2, C3) erfüllt ist (S4), Senden (S5) einer Sequenz zur Steuerung der Abgabetemperatur an die Erzeugungsanlage (10).

10. Unterzähler (12, 14, 16) für die Warmwasserabgabe, wobei der Unterzähler elektronische Schaltkreise umfasst, die ausgestaltet sind zum:

    - Senden, an die Verwaltungseinheit (18) nach Anspruch 9, die entfernt ist, von ersten Informationen, die für mittlere Temperaturen des abgegebenen Wassers repräsentativ sind, nach Zeitbereichen (T1, T2, ..., T8) bestimmt werden und von dem Unterzähler selbst oder von anderen Unterzählern (12, 14, 16) während eines Referenzzeitraums (T) gemessen werden,
    - Empfangen einer ersten Steuersequenz von der Verwaltungseinheit (18) als Antwort auf die ersten Informationen,
    - Senden einer zweiten Steuersequenz, die für die erste Steuersequenz repräsentativ ist, an die Erzeugungseinheit (10) für das Warmwasser.

11. Anlage (1) zur Abgabe von Warmwasser, umfassend eine Erzeugungsanlage für Warmwasser (10), eine Verwaltungseinheit (18) nach Anspruch 9 und einen Unterzähler für die Warmwasserabgabe nach Anspruch 10.

12. Computerprogrammprodukt, **dadurch gekennzeichnet, dass** es Programmcodeanweisungen umfasst, die bei der Ausführung des Programms durch einen Prozessor die Schritte des Verfahrens nach einem der Ansprüche 1 bis 8 ausführen.

13. Informationsspeichermedium, das ein Computerprogrammprodukt nach dem vorhergehenden Anspruch umfasst.

**Claims**

1. Method for controlling a distribution temperature of domestic hot water, the method being implemented in a unit (18) for managing an installation (10) for producing said hot water, and comprising:

    - obtaining (S2) first information representing mean temperatures of said distributed hot water, determined by time ranges (T1, T2 ... T8), and measured by one or more divisional distribution meters (12, 14, 16) during a reference period (T),
    - obtaining (S2) a minimum value (θmin) and a maximum value (θmax) of said first information,
    - determining a temperature condition (C1, C2, C3) of said distributed hot water from at least said maximum value (θmax) or from at least said minimum value (θmin), and from at least one predefined temperature threshold (L1, L2), and
    - if said condition (C1, C2, C3) is met, sending a sequence controlling said distribution temperature to said production installation (10).

2. Method for controlling a distribution temperature of domestic hot water according to the preceding claim, wherein said at least one predefined temperature threshold (L1, L2) is between 45°C and 51°C or equal to one of these values, preferentially between 46°C and 50°C or equal to one of these values.

3. Method for controlling a distribution temperature of domestic hot water according to one of claims 1 and 2, wherein said control sequence is sent to said production installation via one of said water-distribution meters (12, 14, 16).

4. Method for controlling a distribution temperature of domestic hot water according to one of claims 1 to 3, wherein said temperature condition (C1) of said domestic hot water is determined so that said minimum value ($\theta$min) is higher than or equal to a first predefined temperature threshold (L1) and said maximum value ($\theta$max) is lower than or equal to a second predefined temperature threshold (L2), higher than said first threshold (L1).

5. Method for controlling a distribution temperature of domestic hot water according to claim 4, each divisional distribution meter being associated with a dwelling, the method comprising:

   - detecting that a dwelling is unoccupied when a consumption of hot water measured by a divisional distribution meter associated with said dwelling is below a predefined consumption threshold over a period of first predefined duration,
   - detecting that an unoccupied dwelling is once again occupied when the consumption of hot water measured by a divisional distribution meter associated with said dwelling exceeds the predefined consumption threshold over a period of second predefined duration,
   - forcing the minimum mean temperature value ($\theta$min) to a value equal to the first predefined temperature threshold (L1), and forcing the maximum mean temperature value ($\theta$max) to a value equal to the second predefined temperature threshold (L2), for each divisional distribution meter the dwelling of which has previously been detected as unoccupied and detected as once again occupied.

6. Method for controlling a distribution temperature of domestic hot water according to one of claims 1 to 3, wherein said temperature condition (C2) of said domestic hot water is determined so that said minimum value ($\theta$min) is lower than a first predefined temperature threshold (L1).

7. Method for controlling a distribution temperature of domestic hot water according to one of claims 1 to 3, wherein said temperature condition (C3) of said domestic hot water is determined so that said minimum value ($\theta$min) is higher than or equal to a first predefined temperature threshold (L1) and said maximum value ($\theta$max) is higher than a second predefined threshold (L2), higher than the first threshold.

8. Method for controlling a distribution temperature of domestic hot water according to one of claims 4 to 7, wherein said first temperature threshold is equal to 46°C and said second temperature threshold is equal to 50°C.

9. Unit (18) for managing an installation (10) for producing domestic hot water, comprising electronic circuits configured for:

   - obtaining (S2) first information representing mean temperatures of said distributed hot water, determined by time ranges (T1, T2 ... T8) and measured by one or more divisional distribution meters (12, 14, 16) during a reference period (T),
   - obtaining (S2) a minimum value ($\theta$min) and (S2) a maximum value ($\theta$max) of said first information,
   - determining (S3) a temperature condition (C1, C2, C3) of said distributed hot water from at least said maximum value ($\theta$max) or said minimum value ($\theta$min), and from at least one predefined temperature threshold (L1, L2), and
   - if said condition (C1, C2, C3) is met (S4), sending (S5) a sequence controlling the distribution temperature to said production installation (10).

10. Divisional meter (12, 14, 16) for distribution of domestic hot water, the divisional meter comprising electronic circuits configured for:

    - sending, to the remote management unit (18) according to claim 9, first information representing mean temperatures of said distributed water, determined by time ranges (T1, T2 ... T8) and measured by the divisional meter itself or by other divisional meters (12, 14, 16) during a reference period (T),
    - receiving a first control sequence from said management unit (18), in response to said first information,
    - sending a second control sequence, representing said first control sequence, to a unit (10) producing said hot water.

11. Installation (1) for distributing domestic hot water, comprising an installation (10) for producing hot water, a management unit (18) according to claim 9, and a divisional meter for distribution of domestic hot water according to claim 10.

12. Computer program product, **characterised in that** it comprises program code instructions for implementing the steps of the method according to any one of claims 1 to 8, when said program is implemented by a processor.

**13.** Information storage medium comprising a computer program product according to the preceding claim.

Fig. 1

|    | T1 | T2 | T3 | T4 | T5 | T6 | T7 | T8 |
|----|----|----|----|----|----|----|----|----|
| 12 | 48 | 51 | 51 | **51** | 51 | 51 | 51 | 48 |
| 14 | 46 | 49 | 49 | 49 | 49 | 49 | 49 | 46 |
| 16 | 40 | 43 | 43 | 43 | 43 | 43 | 43 | **40** |

T

Fig. 2

**Fig. 3**

**S1** INIT.

**S2**
- obtention des températures moyennes de l'eau réparties par plages horaires à partir d'un ou plusieurs compteurs divisionnaire ;
- déterminer les valeurs min et max

**S3**
détermination d'une condition C1 de température

**S4**
non

condition de consommation C1 remplie ?

oui

**S5**
envoi d'une séquence M1 de contrôle de la chaudière

Fig. 4

S1

INIT.

S2

- obtention des températures moyennes de
l'eau réparties par plages horaires à partir
d'un ou plusieurs compteurs divisionnaire ;
- déterminer les valeurs min et max

S3

détermination d'une condition C2 de
température

S4

non

condition de consommation
C2
remplie ?

oui

S5

envoi d'une séquence M2 de contrôle de la
chaudière

Fig. 5

Fig. 6

18

181    182    183

| PROC | RAM | ROM |

180

| STCK | 184 | COM | 185 |

Fig. 7

## RÉFÉRENCES CITÉES DANS LA DESCRIPTION

**Documents brevets cités dans la description**

*   EP 3098536 A1
*   FR 2936042 A1